# EUROPÄISCHE PATENTSCHRIFT

(11) **EP 3 376 933 B1**
(45) Veröffentlichungstag und Bekanntmachung des Hinweises auf die Patenterteilung: **25.08.2021**
(21) Anmeldenummer: 16805266.0
(22) Anmeldetag: 15.11.2016
(51) Int. Cl.: A47L 15/42, A01D 34/00, A47L 11/24, G05D 1/02, A47L 9/28, A47L 9/00

(54) **ROBOTERGESTÜTZTE BEARBEITUNG EINER OBERFLÄCHE MITTELS EINES ROBOTERS**
ROBOT-ASSISTED MACHINING OF A SURFACE USING A ROBOT
USINAGE D'UNE SURFACE ASSISTÉ PAR ROBOT

(30) Priorität: 17.11.2015 DE 102015119865
(43) Veröffentlichungstag der Anmeldung: 26.09.2018
(73) Patentinhaber: Robart GmbH, 4020 Linz (AT)
(72) Erfinder: ARTES, Harold, 4020 Linz (AT); CONTI, David, 4020 Linz (AT); FREUDENTHALER, Christoph, 4020 Linz (AT); MASCHER, Erwin, 4020 Linz (AT); VOGEL, Reinhard, 4020 Linz (AT)
(74) Vertreter: Westphal, Mussgnug Patentanwälte & Partner mbB
(86) Internationale Anmeldenummer: PCT/AT2016/060110
(87) Internationale Veröffentlichungsnummer: WO 2017/083896

(56) Entgegenhaltungen:
- EP-A1- 0 142 594
- US-A- 5 284 522
- US-A1- 2005 010 331

## Beschreibung

### TECHNISCHES GEBIET

Die Erfindung betrifft einen Roboter zur Bearbeitung von Oberflächen, wie z.B. zur Reinigung von Böden (Staubsaugerroboter), zum Mähen von Gras, Zum Anstreichen einer Fläche, etc. Die Erfindung betrifft des Weiteren ein vom Roboter durchgeführtes Verfahren zur effizienten Ausführen der jeweiligen Tätigkeit durch den Roboter.

### HINTERGRUND

In den letzten Jahren finden autonome mobile Roboter zunehmend Verwendung beispielsweise zur Reinigung einer Bodenfläche oder zum Mähen einer Rasenfläche. In beiden Fällen kommt es darauf an, eine gewisse Fläche vollständig mit einem am Roboter angebrachten Flächenbearbeitungsgerät wie beispielsweise einer Bürste zu bearbeiten. Einfache Geräte kommen ohne die Erstellung und Nutzung einer Karte des Robotereinsatzgebiets aus, indem sie sich beispielsweise zufällig über die zu reinigende Fläche bewegen. Komplexere Roboter nutzen eine Karte des Robotereinsatzgebiets, welche sie selber erstellen oder in elektronischer Form zur Verfügung gestellt bekommen. Diese Systeme ermöglichen es, sich die bereits bearbeiteten Flächen zu merken.

Diese modernen autonomen mobilen Roboter mit Kartenfunktion versuchen bei der Bearbeitung (z. B. Reinigung) einer Fläche ein möglichst systematisches Bearbeitungsmuster zu nutzen. Dieses muss an die komplexen Gegebenheiten des Einsatzgebiets wie einer Wohnung mit Möbeln angepasst werden. Zudem muss der Roboter in der Lage sein auf unerwartete Gegebenheiten zu reagieren, wie beispielsweise Menschen, die sich in seinem Einsatzgebiet bewegen, oder Hindernisse, die mit den Sensoren des Roboters schwer erfassbar sind. Allerdings kann es passieren, dass hierbei einige Bodenbereiche ausgelassen werden. Ein Roboter kann ein Detektionsmodul besitzen, um solch eine vergessene Fläche am Ende oder während eines Durchlaufs zu detektieren und nachträglich zu reinigen. Hierzu muss die bereits bearbeitete Fläche nochmals befahren werden, wodurch die Bearbeitungseffizienz reduziert beziehungsweise die Bearbeitungsdauer für das Gesamtgebiet erhöht wird. US 5,284,522 offenbart ein Verfahren zur Reinigung einer Bodenfläche durch einen Roboter, bei dem das zu reinigende Gebiet in Blöcken aufgeteilt ist. Um den nächsten, zu bearbeitenden Block auszuwählen, wird in einer bevorzugten Reihenfolge geprüft, welcher der Nachbarblöcke frei und noch nicht gereinigt wurde. EP 0 142 594 A1 offenbart ein Reinigungsverfahren, in dem der Roboter sich mäanderförmig bewegt. Dabei werden Hindernisblöcke erfasst. Wenn das Ende eines Hindernisses detektiert wird, fährt der Roboter bis zur nächsten Wand und bearbeitet dann die Blöcke, die er als frei erfasst hat. US 2005 010 331 A1 offenbart ein ähnliches Reinigungsverfahren.

Ganz allgemein kann die der Erfindung zugrunde liegende Aufgabe darin gesehen werden, bestehende von Robotern durchgeführte Verfahren für einen autonomen mobilen Roboter zur Bearbeitung einer Oberfläche (z.B. zum Reinigung einer Bodenfläche) zu verbessern, um hierdurch die Effizienz des Roboters zu steigern.

### ZUSAMMENFASSUNG

Die oben genannte Aufgabe wird durch ein Verfahren gemäß einem der Ansprüche 1 und 11 sowie durch einen Roboter gemäß Anspruch 15 gelöst. Verschiedene Ausführungsformen und Weiterentwicklungen der Erfindung sind Gegenstand der abhängigen Ansprüche.

Im Folgenden wird ein Verfahren zum Bearbeiten einer Oberfläche eines zu bearbeitenden Gebiets mittels eines autonomen, mobilen Roboters beschrieben. Gemäß einem Beispiel der Erfindung wird die Oberfläche vom Roboter entlang von Bahnsegmenten einer Roboterbahn gemäß einem ersten Bearbeitungsmuster bearbeitet. Das zu bearbeitenden Gebiets wird abhängig von einer aktuellen Position des Roboters zerlegt in einen ersten Bereich, der gemäß dem Bearbeitungsmuster schon bearbeitet sein sollte, einen zweiten Bereich, der noch bearbeitet werden soll, und in einen dritten Bereich, der aktuell bearbeitet wird. Der Roboter kann dann prüfen, ob der erste Bereich tatsächlich vollständig gereinigt wurde.

Gemäß einem weiteren Ausführungsbeispiel umfasst das Verfahren das Bearbeiten der Oberfläche entlang von Bahnsegmenten einer Roboterbahn gemäß einem ersten Bearbeitungsmuster, wobei die Bahnsegmente eine Reihenfolge aufweisen. Das Verfahren umfasst weiter das Detektieren - während des Bearbeitens eines bestimmten Bahnsegments umfasst weiter das Detektieren - während des Bearbeitens eines bestimmten Bahnsegments der Bahnsegmente - ob in mindestens einem Bahnsegment, welches in der Reihenfolge vor dem bestimmten Bahnsegment liegt, ein noch nicht bearbeiteter Bereich existiert, der bei ungehinderter Durchführung der Bearbeitung gemäß der Reihenfolge bereits hätte gereinigt werden müssen. Sobald ein ausgelassener Bereich detektiert wurde, kann der Roboter entscheiden, ob der ausgelassene Bereich bearbeitet werden sollte.

Weitere Ausführungsbeispiele beziehen sich auf einen Roboter, der mit einer internen und/oder externen Datenverarbeitungsanlage verbunden ist, die dazu ausgebildet ist, ein Softwareprogramm auszuführen, das, wenn es von der Datenverarbeitungsanlage ausgeführt wird, den Roboter dazu veranlasst, die hier beschriebenen Verfahren auszuführen.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. In den Abbildungen zeigt:
Figur 1 zeigt verschiedene Beispiele von Navigationsstrategien für einen autonomen Roboter bei der Bearbeitung einer Oberfläche.
Figur 2 illustriert schematisch das Problem "ausgelassener" (nicht bearbeiteter) Bereiche, wenn aufgrund eines Hindernisses die zuvor berechnete Bahn des Roboters angepasst werden muss.
Figur 3 zeigt beispielhaft Reinigungskarten (Karte, in der bereits gereinigte Bereiche markiert sind) in der Umgebung eines Reinigungsroboters mit und ohne Störung durch ein Hindernis.
Figur 5 eine weitere Möglichkeit zur schrittweisen Anpassung der Roboterbahn zur Bearbeitung eines zuvor wegen eines Hindernisses ausgelassenen Bereichs.
Figur 6 illustriert verschiedene Ansätze bei der dynamischen Anpassung einer Roboterbahn zum Umfahren (*bypass*) eines Hindernisses.
Figur 7 illustriert verschiedene Ansätze bei der dynamischen Anpassung einer Roboterbahn zum Ausweichen (*avoid*) und Suche eines Startpunkts für die Fortsetzung der Reinigung.
Figur 8 zeigt eine ähnliche Situation wie in Fig. 7, jedoch mit einem zum Roboter unsymmetrischen Planungsgebiet, das bei der Planung einer angepassten Roboterbahn zum Ausweichen oder Umfahren eines Hindernisses berücksichtigt wird.
Figur 9 illustriert verschiedene Strategien und Entscheidungskriterien bei der Auswahl eines Ausweichbahnsegments (Umfahrung des Hindernisses links oder rechts).
Figur 10 illustriert verschiedene Strategien und Entscheidungskriterien bei der Auswahl eines Ausweichbahnsegments (Umfahrung des Hindernisses oder Fortsetzen der Reinigung in einem anderen geradlinigen Mäandersegment).
Figur 11 illustriert ein Beispiel der systematischen Bearbeitung eines Gebiets mit Hindernissen gemäß den hier beschriebenen Strategien.
Figur 12 illustriert ein Beispiel der systematischen Bearbeitung eines Gebiets mit überlappenden Bahnsegmenten.

### DETAILLIERTE BESCHREIBUNG

Die Erfindung wird im Folgenden beispielhaft anhand von Ausführungsbeispielen erläutert, die sich auf einen autonomen Roboter zur Reinigung von Bodenflächen (z.B. Staubsaugerroboter) beziehen. Die hier beschriebenen Ausführungsbeispiele sind aber auch auf andere Bereiche anwendbar, in denen eine Fläche möglichst vollständig von einer autonomen, mobilen Arbeitsmaschine bearbeitet werden soll. Weitere Beispiele für solche Roboter sind unter anderem Maschinen zum Abtragen einer Bodenschicht (beispielsweise durch Abschleifen), Maschinen zum Auftragen von beispielsweise einer Farbe auf eine Fläche und Maschinen zum Mähen einer Rasenfläche, zum Bearbeiten einer Ackerfläche sowie autonome Erntemaschinen.

Ein mobiler autonomer Roboter 100 umfasst in der Regel ein Antriebsmodul, welches beispielsweise Elektromotoren, Getriebe und Räder aufweisen kann, wodurch der Roboter theoretisch jeden Punkt einer Bodenfläche erreichen kann. Der Roboter umfasst des Weiteren ein Bearbeitungsmodul, wie beispielsweise ein Reinigungsmodul zur Reinigung der Bodenfläche, wie beispielsweise eine Bürste oder einer Vorrichtung zum Einsaugen von Schmutz (oder beides). Derartige Roboter sind an sich bekannt und unterscheiden sich im Wesentlichen durch die Art der Navigation in der Umgebung sowie durch die Strategie, die bei der Bearbeitung der Bodenfläche, wie z. B. bei einem Reinigungsvorgang, angewandt wird.

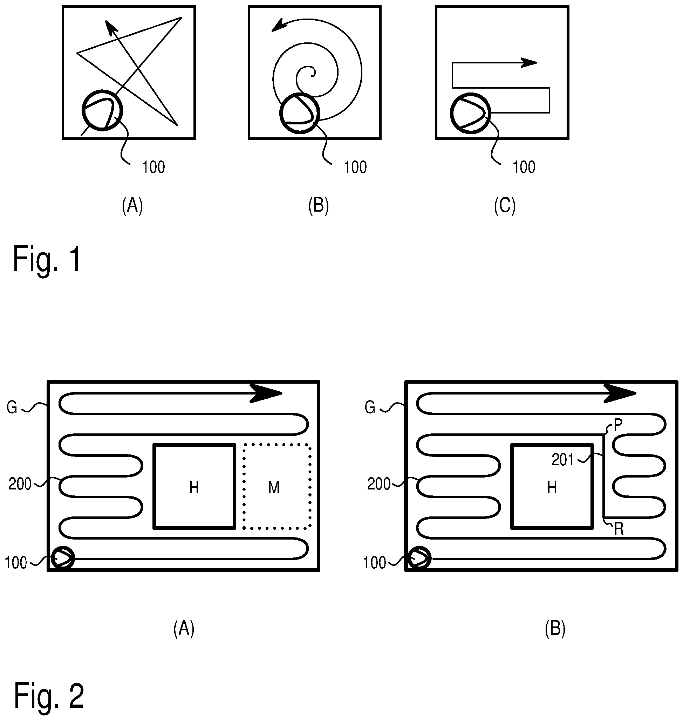

Figur 1 zeigt verschiedene Beispiele von Navigationsstrategien. In Fig. 1A verwendet der Roboter 100 ein zufälliges Navigationsverfahren, wodurch er ohne Erstellung bzw. Verwendung einer Karte auskommt (vgl. z.B. Publikation EP 2287697 A2 von iRobot Corp.). Auf diese Weise werden Bodenflächen in einem zu reinigenden Gebiet G teilweise mehrfach gereinigt, während andere Bodenflächen möglicherweise gar nicht gereinigt werden.

Um die Effizienz der Bodenbearbeitung zu steigern, wurden systematische Reinigungsmuster entwickelt, um ein Gebiet G in einem Zug und mit möglichst wenigen Überlappungen der bearbeiteten Flächen zu bearbeiten. Diese Bearbeitungsmuster (*process pattern*) ergeben sich beispielsweise durch aneinanderreihen von Bahnsegmenten (*track segments*) zu einem Roboterbahn (*track*), die der Roboter bearbeitet. Durch die Aneinanderreihung von Bahnsegmenten ergibt sich beispielsweise ein spiralförmiges (siehe Fig. 1B) oder ein mäanderförmiges Bearbeitungsmuster (siehe Fig. 1C; auch als Zickzack-Muster oder Boustrophedon-Muster bezeichnet). Beispielsweise besteht ein mäanderförmiges Bearbeitungsmuster 200 aus mehreren langen, geraden und annähernd parallelen Bahnsegmenten, welche durch kurze Verbindungsstücke (gerade und/oder gekurvt) verbunden sind. Diese Bearbeitungsmuster können in verschiedenen Varianten ausgestaltet sein und untereinander kombiniert werden. Zusätzlich sind sie mit weiteren Strategien kombinierbar wie beispielsweise Strategien zum Ausweichen von Hindernissen oder zur Reinigung stark verschmutzter Bereiche des Gebiets G.

Um ein zuverlässiges Abfahren gemäß dieser Bearbeitungsmuster zu gewährleisten, und um die Roboterbahnen an das Robotereinsatzgebiet anzupassen, kann der Roboter 100 eine Karte der Umgebung und gleichzeitig auch seine Position in dieser Karte mit Hilfe geeigneter, z.B. am Roboter angeordneter Sensoren und beispielsweise einem SLAM-Verfahren ermitteln (SLAM: *Simultaneous Localization and Mapping,* deutsch: simultane Lokalisierung und Kartenerstellung, siehe z. B. H. Durrant-Whyte and T. Bailey: "Simultaneous Localization and Mapping (SLAM): Part I The Essential Algorithms", in: IEEE Robotics and Automation Magazine, Bd. 13, Nr. 2, S. 99-110, Juni 2006). Hierdurch ist es möglich gezielt jeden (erreichbaren) Punkt in einem vorgegebenen Gebiet G anzufahren und zu reinigen. Im Idealfall wird hierbei jeder Punkt genau einmal angefahren, um eine erneute Reinigung eines schon gereinigten Bereichs zu vermeiden, wodurch die benötigte Zeit für die Reinigung des Gebiets G deutlich reduziert wird. Ein geeigneter Sensor ist beispielsweise ein Sensor zur Messung von Abständen zu Objekten in der Umgebung wie z.B. ein optischer und/oder akustischer Sensor, der mittels optischer Triangulation oder Laufzeitmessung eines ausgesandten Signals arbeitet (Triangulationssensor, Time-Of-Flight-Kamera, Laserscanner, Ultraschallsensoren). Andere typische Beispiele für geeignete Sensoren sind Kameras, taktile Sensoren, Beschleunigungs- und Drehratensensoren und Odometer.

Um sicher zu gehen, dass jeder Punkt des Gebiets G gereinigt wurde, kann der Roboter die schon bearbeiteten Flächen in einer Reinigungskarte (Karte, in der bereits gereinigte Bereiche markiert sind) abspeichern. Hierzu kann z.B. eine Rasterkarte verwendet werden, in der das Gebiet G in eine Vielzahl quadratischer Teilflächen unterteilt wird, und für jedes Quadrat gespeichert wird, ob es schon gereinigt wurde. Die Kantenlänge eines solchen Quadrats kann beispielsweise der Größe des Reinigungsmoduls entsprechen oder kleiner sein. Alternativ kann der Roboter z.B. seine Trajektorie (Verlauf der Roboterbahn) abspeichern und hieraus berechnen, welche Bereiche des Gebiets G schon bearbeitet wurden und welche noch zu bearbeiten sind.

Das vorgegebene, zu bearbeitende Gebiet G kann durch reale Hindernisse wie Wände eingegrenzt sein (z.B. eine Wohnung oder ein abgeschlossener Raum einer Wohnung). In fortschrittlicheren Geräten kann das Gebiet G zusätzlich durch virtuelle Begrenzungen definiert sein. Die virtuelle Begrenzung kann beispielsweise in einer Karte des Robotereinsatzgebiets (z.B. in Form von Begrenzungslinien) durch einen Nutzer oder den Roboter definiert werden. Beispielsweise kann der Roboter das Gesamtgebiet in mehrere Teilgebiete (z.B. mehrere Räume einer Wohnung oder mehrere Bereiche eines Raumes) unterteilen, die nacheinander bearbeitet werden.

Generell kann der Roboter 100 mit Hilfe von Sensoren Merkmale seiner Umgebung erfassen und, basierend auf den erfassten Merkmalen, Hindernisse detektieren Die von den Sensoren erfassten Merkmale können auch eine Lokalisierung des Roboters in einer elektronischen Karte ermöglichen. Trotz einer kartenbasierten Navigation ist eine zuverlässige Vorausplanung einer Reinigung eines Gebiets G aufgrund fehlerbehafteter Sensor- und Kartendaten kaum möglich. Grund hierfür sind Hindernisse, die sich mit Hilfe der am Roboter angeordneten Sensoren nur schwer erfassen lassen, oder dynamische Hindernisse, wie Menschen oder Haustiere, die kurzfristig den Weg des Roboters blockieren können. Eine (räumlich und/oder zeitlich) weitreichende Vorausplanung ist also nur sehr eingeschränkt möglich und folglich ist es notwendig, vom Roboter verwendete Bearbeitungsmuster dynamisch an unvorhergesehene (z.B. weil unvorhersehbare) Situationen anzupassen. Im Folgenden werden unterschiedliche Ansätze für einen Roboter beschrieben, vorgegebene Bearbeitungsmuster bei Bedarf (z.B. bei Erkennung eines nicht vorhergesehenen Hindernisses) dynamisch anzupassen. Dadurch wird es dem Roboter möglich "intelligent" auf eine dynamisch sich verändernde Umgebung (z.B. durch bewegte Hindernisse) effizient zu reagieren.

Figur 2A zeigt gemäß dem Stand der Technik beispielhaft einen autonomen mobilen Roboter 100, der ein Gebiet G systematisch von "unten nach oben" (auf der Karte gemäß Fig. 2A) mittels einer mäanderförmigen Bahn 200 reinigt. Durch ein Hindernis H kann in einem Teil des Gebiets G nicht die volle Breite gereinigt werden, wodurch der Teilbereich M ausgelassen wird. Um eine Kollision zu vermeiden, dreht der Roboter vor dem Hindernis um und setzt die Bearbeitung entlang des nächsten (auf der Karte darüberliegenden) geraden Teilstücks der Mäanderbahn 200 fort. Die von dem Hindernis H blockierten Teilstücke der Mäanderbahn 200 werden also verkürzt (im Vergleich zu einer Situation ohne Hindernis H). Wenn der Roboter 100 eine Reinigungskarte nutzt, in der die bereits gereinigten Bereiche des zu bearbeitenden Gebiets G gespeichert werden, so kann der Roboter 100 den ausgelassenen Bereich M (siehe gepunktete Linie in Fig. 2A) nach Abschluss der Reinigung detektieren (d.h. den unbearbeiteten Bereich des Gebiets G als solchen erkennen) und diesen gezielt anfahren und bearbeiten. Jedoch muss der Roboter hierbei ein schon gereinigtes Gebiet nochmals befahren, wodurch die Effizienz (z.B. Bearbeitungszeit pro Flächeneinheit des Gebiets G) des gesamten Bearbeitungsvorgangs sinkt.

Figur 2B zeigt beispielhaft, wie die systematische Bearbeitung des Gebiets G gemäß dem hier beschriebenen Ansatz verbessert wird. Der autonome mobile Roboter 100 reinigt das Gebiet G systematisch von "unten nach oben" mittels einer mäanderförmigen Bahn 200. Zudem prüft der Roboter 100 regelmäßig (beispielsweise mit einer Reinigungskarte, in der die bereits gereinigten Flächen verzeichnet sind), ob ein ausgelassener Bereich M "unterhalb" des Roboters vorhanden und direkt befahrbar ist. In Punkt P detektiert der Roboter 100 einen derartigen Bereich M und adaptiert entsprechend dem Bearbeitungsmuster, um diesen zu reinigen. Der Bereich M wird deswegen als "ausgelassen" bezeichnet, weil er zu dem Zeitpunkt, an dem der Roboter am Punkt P ankommt, ohne das Hindernis H bereits gereinigt worden wäre. Die Anwesenheit des Hindernisses hat also das Auslassen des Bereichs M verursacht. Im Folgenden werden verschiedene Ansätze zur selbsttätigen Detektion von ausgelassenen Bereichen durch den Roboter erläutert.

An dieser Stelle sei bemerkt, dass die Beschreibungen "von unten nach oben" oder "von oben nach unten" sowie "oberhalb der Roboterposition" oder "unterhalb der Roboterposition" nicht einschränkend sind, sondern sich nur auf die dargestellten Beispiele der Karten der Umgebung des Roboters beziehen. Tatsächlich kann bei jeder systematischen Reinigung mittels einer mäanderförmigen Bahn ein Koordinatensystem gewählt werden, so dass der Roboter in diesem Koordinatensystem seine Bearbeitung des Gebiets G "unten" beginnt und "oben" beendet.

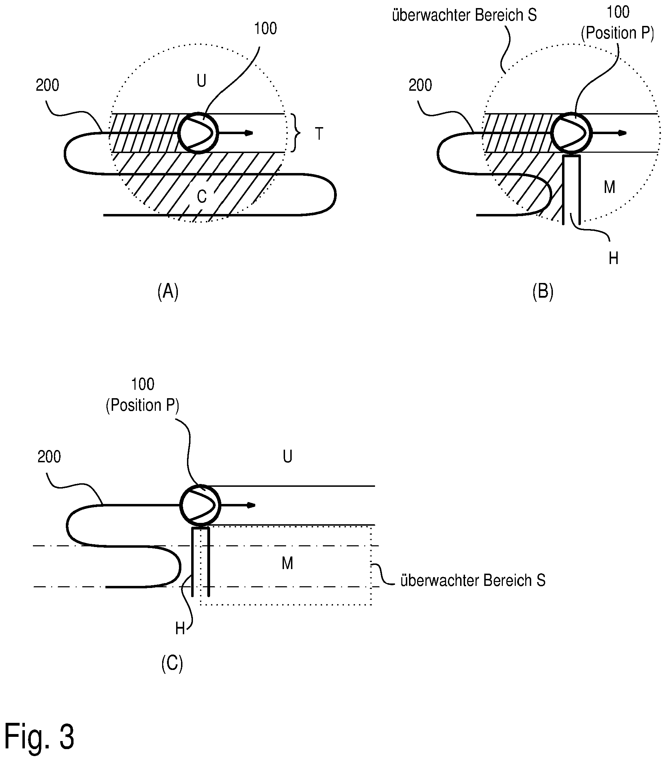

Um einen ausgelassenen Bereich M (siehe Fig. 2A) während der Reinigung zu detektieren, kann der Roboter beispielsweise laufend den in einer Reinigungskarte erfassten Bearbeitungsstatus (Reinigungsstatus) seiner unmittelbaren Umgebung überprüfen. Figur 3A zeigt beispielhaft die gereinigte Fläche in der Umgebung des Roboters 100 bei einer systematischen Reinigung mittels einer mäanderförmigen Bahn 200, die aus mehreren miteinander verbundenen, geradlinigen Teilbahnen zusammengesetzt ist. Die Fläche unterteilt sich in den aktuell bearbeiteten Bahnabschnitt T (Bearbeitungsstatus T, *Track,* Spur), einen noch nicht gereinigt Bereich U (Bearbeitungsstatus U, *Uncleaned,* ungereinigt), und einen zuvor gereinigten Bereich C (Bearbeitungsstatus C, *Cleaned,* gereinigt). Bei einer (störungsfreien) systematischen Reinigung (z.B. entlang einer Mäanderbahn) ist solch eine Unterteilung der Umgebung des Roboters 100 immer möglich und leicht bestimmbar. Des Weiteren kann der Roboter 100 an jedem Ort im Gebiet G (d.h. zu dem Zeitpunkt, an der er an einem bestimmten Punkt ankommt) ermitteln, welcher Bereich des Gebiets G bei störungsfreier Bearbeitung bereits gereinigt sein (also den Bearbeitungsstatus C aufweisen) sollte. Mittels eines Vergleichs dieses Soll-Zustandes (vgl. Fig. 3A) mit dem aus der Reinigungskarte ersichtlichen Ist-Zustandes (vgl. Fig. 3B), können ausgelassene Bereiche M ermittelt werden. Ein Beispiel hierfür ist in Fig. 3B skizziert.

Figur 3B zeigt die gereinigte Fläche in der Umgebung des Roboters 100 bei einer systematischen Reinigung entlang einer mäanderförmigen Bahn 200. Dabei wurde (vgl. Fig. 2A) aufgrund eines Hindernis H das zu reinigende Gebiet G nicht vollständig bearbeitet, wodurch ein ausgelassener Teilbereich M entstand. Durch Vergleich dieses Reinigungsergebnis (Ist-Zustand) mit dem geplanten bzw. gewünschten Ergebnis (Soll-Zustand) aus Abb. 3A kann der Roboter 100 das ausgelassene Flächenstück detektieren und sofort reinigen. Sobald ein ausgelassener Teilbereich M detektiert wurde (an der Position P angekommen), kann der Roboter 100 sich dafür entscheiden, einen ausgelassenen Teilbereich zu reinigen, wenn dessen Größe (Fläche, Länge oder Breite, oder eine Kombination dieser Kenngrößen) innerhalb der überwachten Umgebung des Roboters einen vordefinierten Grenzwert überschreitet. Darüber hinaus wird sich der Roboter 100 nur dann dafür entscheiden ein ausgelassenes Flächenstück zu reinigen, wenn dieses von der Position des Roboters 100 direkt (ohne Umfahrung eines Hindernis) erreichbar ist. Insbesondere wird der Roboter 100 in dem Beispiel aus Fig. 3B sich erst dann für die Reinigung des ausgelassenen Flächenstücks M entscheiden, wenn er an dem Hindernis H vorbeigefahren ist (also nach Erreichen der Position P) und kein neues störendes Hindernis auftaucht.

Die überwachte Umgebung kann wie in Fig. 3 dargestellt auf einen kreisförmigen Bereich S eingeschränkt sein, der symmetrisch um den Roboter 100 angeordnet ist (siehe Fig. 3A und 3B). Auch ein rechteckiger Bereich in Fahrtrichtung vor dem Roboter (siehe Fig. 3C) wäre möglich. Alternativ kann sie auch auf den Bereich eingeschränkt sein, der erwartungsgemäß gereinigt sein sollte. So kann die überwachte Umgebung beispielsweise auf den Bereich beschränkt sein, der von dem letzten geradlinigen Bahnabschnitt (oder von den letzten beiden geradlinigen und parallel liegenden Bahnabschnitten) der Mäanderbahn 200 abgedeckt wird. Die überwachte Umgebung kann beispielsweise neben dem aktuell bearbeiteten Bahnabschnitt T (der gerade bearbeiteten Spurt T) liegen und sich nach vorne zwei Roboterdurchmesser erstrecken. Hierbei wird sich die betrachtete Umgebung abhängig vom gefahrenen Reinigungsmuster ändern. So ist in dem Beispiel von Fig. 3 nur der Bereich rechts (in Fahrtrichtung) des Roboters 100 relevant. Den nächsten (bzw. den vorhergehenden) parallelen Bahnabschnitt würde der Roboter 100 in die entgegengesetzte Richtung abfahren, wodurch der Bereich links (in Fahrtrichtung) des Roboters 100 relevant ist. Zudem kann die betrachtete Umgebung an die Eigenschaften einer verwendeten Reinigungskarte angepasst sein. Wenn diese beispielsweise eine Rasterkarte ist, so ist der beobachtete Bereich S beispielsweise rechteckig (siehe Fig. 3C) und enthält eine vorgegebene Anzahl an Teilflächen.

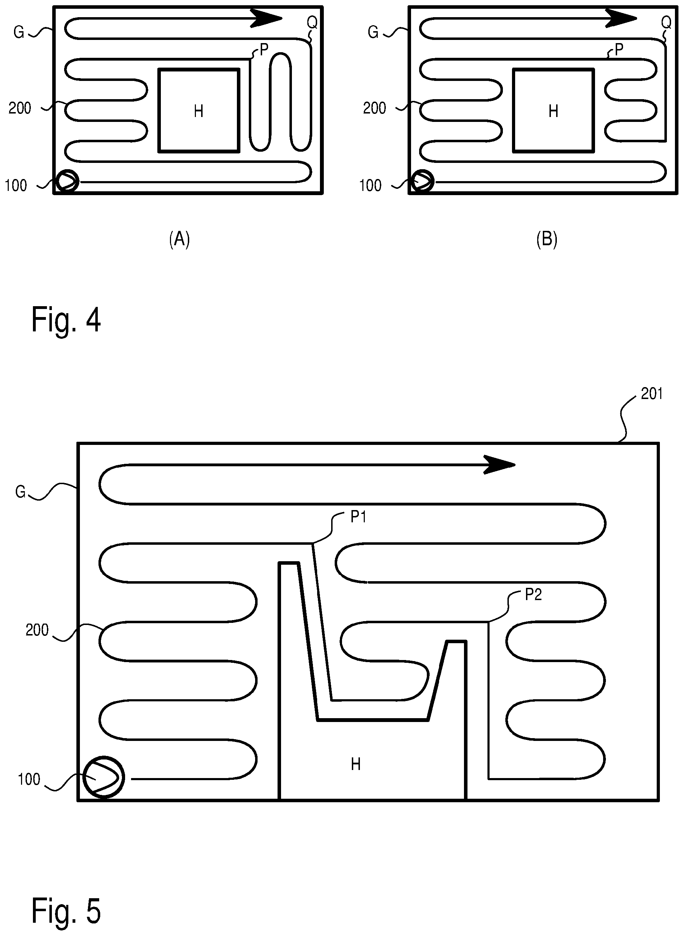

Die Anpassung des Reinigungsmusters, um einen ausgelassenen Bereich M zu reinigen kann auf unterschiedliche Art und Weise geschehen. In dem zuvor erläuterten Beispiel aus Fig. 2B fährt der Roboter 100 entlang des Hindernisses soweit wie möglich nach rechts bis zum Ende des ausgelassenen Bereichs M (auf der Karte zum untersten Punkt R des Bereichs M) und setzt dort die systematische Reinigung mittels einer mäanderförmigen Bahn 200 fort. Hierdurch wird ein "nahtloser" Übergang zur Reinigung des zuvor ausgelassenen Bereichs M erreicht, und es wird eine vollständige Bearbeitung des zu reinigenden Gebiets G in einem Durchlauf ermöglicht, ohne dass ein Bereich zweimalig befahren werden müsste. Zusätzlich kann z.B. innerhalb des ausgelassenen Gebiets M der Abstand zweier benachbarter Mäanderbahnen so angepasst werden, dass der Roboter die Bearbeitung am Punkt P (oder in dessen Nähe) wieder fortsetzen kann, nachdem der Bereich M auch bearbeitet wurde. In der Fig. 4 sind Alternativen zu dem in Fig. 2 dargestellten Ansatz zur Reinigung des ausgelassenen Bereichs M dargestellt.

Figur 4A zeigt eine weitere Möglichkeit zur Anpassung der Roboterbahn zur Bearbeitung eines zuvor wegen des Hindernisses H ausgelassenen Bereichs M, indem die Mäanderrichtung um 90° gedreht wird. Dies geschieht beispielsweise als Anpassung an die geometrische Form des ausgelassenen Bereichs M, um die Anzahl der notwendigen Mäanderbahnen bei einem (in Mäanderrichtung) sehr schmalen aber (quer zur Mäanderrichtung) langen ausgelassenen Gebiet zu reduzieren. Hierbei kann z.B. auch die im Punkt P unterbrochene Bahn (jene Fläche, die gereinigt werden würde, wenn der Roboter im Punkt P fortgesetzt hätte) mit gereinigt werden. Nach Abschluss der Reinigung des ausgelassenen Bereichs M wird das ursprüngliche Reinigungsmuster am Punkt Q wieder aufgenommen.

Figur 4B zeigt eine weitere Möglichkeit zur Anpassung des Bearbeitungsmusters (*process pattern*) bzw. Reinigungsmusters (*cleaning pattern*), indem die Mäanderbahn gespiegelt wird. Hierbei wird die Reinigung der aktuellen Bahn fortgesetzt nachdem im Punkt P ein ausgelassenes Gebiet detektiert wurde. Am Ende dieser Bahn wird eine neue Mäanderbahn unterhalb der aktuellen Bahn (im ausgelassenen Gebiet) gewählt. Wenn der ausgelassene Bereich M vollständig gereinigt wurde, setzt der Roboter die Reinigung des verbleibenden Gebiets fort. Die geradlinigen Teilstücke der Mäanderbahn durch den Bereich M können so verkürzt werden, dass am Rand (rechts in Fig. 4B) ein Streifen unbearbeitet bleibt, der dann bei der Rückfahrt zum Punkt Q, an dem die Reinigung des verbleibenden Teils des Gebiets G fortgesetzt wird. Die Rückfahrt erfolgt in diesem Beispiel entlang der dem Hindernis H abgewandten Seite des Bereichs M.

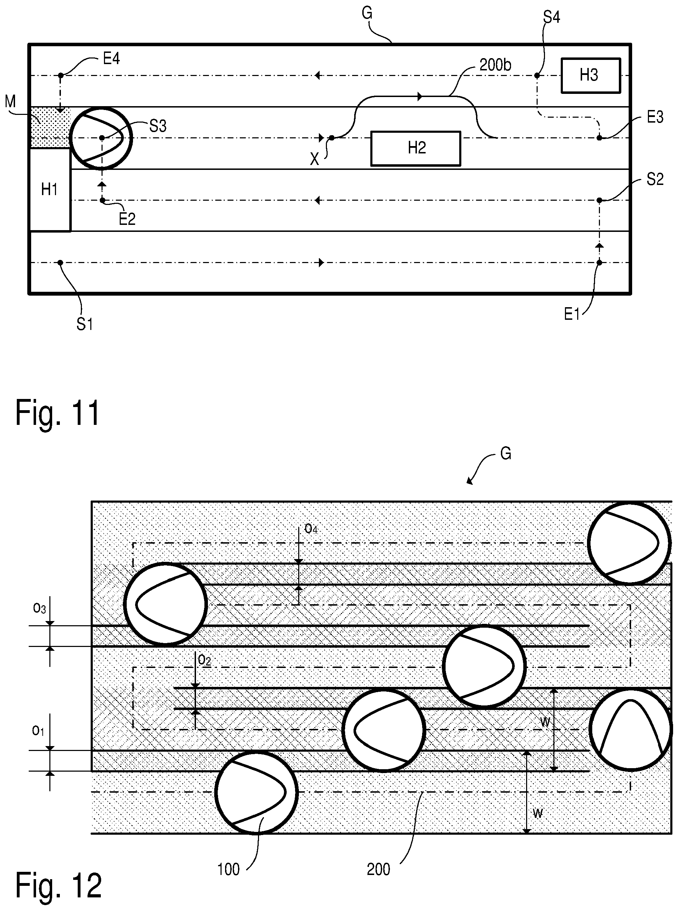

Um eine passende Anpassung des Bearbeitungsmusters zu wählen, kann der Roboter seine vorhandenen Kartendaten nutzen. Allerdings können diese Kartendaten fehlerbehaftet sein. Alternativ kann der Roboter die Grenzen des ausgelassenen Gebiets M zumindest teilweise neu erkunden. Hierzu kann der Roboter beispielsweise mit einer Randfolgefahrt den Grenzen des Ausgelassenen Gebiets zumindest teilweise folgen. Die Grenzen des ausgelassenen Gebiets M sind beispielsweise durch die Grenzen des Gebiets G, durch Hindernisse und durch bereits gereinigte Flächen gegeben. Die bereits gereinigten Flächen können hierbei zumindest teilweise überlappend befahren werden, um das Reinigungsergebnis zu verbessern (vgl. Fig. 12).

Figur 5 zeigt eine bevorzugte Variante der Anpassung des Bearbeitungsmusters, welche auch bei komplexen ausgelassenen Bereichen (aufgrund komplexerer Hindernisse H) robust ist. Hierbei fährt der Roboter 100 nach Detektion eines ausgelassenen Gebiets M1 im Punkt P1 ein erstes "lokales Minimum" (d.h. der Roboter folgt dem Hindernis entlang einer "Kante" in den ausgelassenen Bereich hinein bis zu einer Ecke) an. Hierbei detektiert der Roboter 100 das lokale Minimum während einer Randfolgefahrt beispielsweise dadurch, dass die Orientierung des Roboters in Richtung der letzte Mäanderbahn zeigt, und/oder dass der Roboter sich nicht mehr von der letzten Mäanderbahn wegbewegt, und/oder dass der Roboter sich wieder auf die letzte Mäanderbahn zubewegt. Hier startet er die systematische Reinigung mittels Mäandern von "unten nach oben" erneut. Im Punkt P2 detektiert er erneut ein ausgelassenes Gebiet M2 und beginnt dieses nach der zuvor beschriebenen Methode zu reinigen. Hierdurch kann der Roboter 100 das Gebiet G trotz des komplexen Hindernisses H systematisch und vollständig in einem Zug reinigen.

Die obigen Erläuterungen betreffen im Wesentlichen die Detektion (Erkennung als solche und die Ermittlung von Lage und Größe) eines Bereichs M (oder mehrerer ausgelassener Teilbereiche M1, M2), dessen Bearbeitung zuvor aus welchen Gründen auch immer ausgelassen wurde (z.B. aufgrund eines Hindernisses H, das bei der anfänglichen Planung der Roboterbahn nicht berücksichtigt wurde). Im Folgenden wird noch auf die dynamische Planung einer Roboterbahn zur Bearbeitung von Oberflächen eingegangen. Grundsätzlich erfolgt die Bearbeitung einer Oberfläche gemäß einem definierten Bearbeitungsmuster, beispielsweise ein Mäandermuster, gemäß dem die Bearbeitung entlang einer mäanderförmigen Bahn erfolgt, die aus mehreren geradlinigen und parallel liegenden Bahnsegmenten und zugehörigen Verbindungssegmenten zusammengesetzt werden kann. Ein Bearbeitungsmuster muss an die tatsächlichen Gegebenheiten wie die Geometrie des Gebiets G und den darin befindlichen Hindernissen angepasst werden. Dies geschieht gemäß den hier beschriebenen Verfahren dynamisch während der Bearbeitung, um auf bestimmte Ereignisse reagieren zu können wie z.B. auf bewegliche und/oder noch nicht (mit Sensoren) erfasste Hindernisse, die bei der anfänglichen Bahnplanung nicht berücksichtigt wurden oder nicht berücksichtigt werden konnten.

Ein Bearbeitungsmuster umfasst zumindest eine erste Bahn (*track*), die vom Roboter bearbeitet werden soll. Die Breite w der Bahn entspricht der Breite des Bearbeitungsmoduls des Roboters, und die Bahn kann aus mehreren Bahnsegmenten (*track segments*) zusammengesetzt sein (z.B. mehrere parallel liegende geradlinige Segmente im Fall eines Mäandermusters). An dieser Stelle sei angemerkt, dass zur Vereinfachung der Darstellung in den Abbildungen davon ausgegangen wird, dass das Bearbeitungsmodul so breit wie der Roboter ist. In der Praxis muss das Bearbeitungsmodul nicht die gesamte Breite des Roboters einnehmen. Der Roboter soll primär die Bahn so weit wie möglich abarbeiten. Hindernissen (oder andere Elemente), die den Fahrweg des Roboters bei der planmäßigen Bearbeitung der Bahn blockieren, soll ausgewichen werden, wenn dies sinnvoll ist. Es sind Roboter bekannt, die das Hindernis komplett umrunden, bevor sie eine Entscheidung über die weitere Reinigung treffen, wodurch die Effizienz der Reinigung sinken kann. Andere Roboter beenden die Bearbeitung des aktuellen Bahnsegments bei einem Hindernis und beginnen mit der Bearbeitung eines anderen Bahnsegments. Wiederum andere Roboter folgen dem Hindernis bis eine Abbruchbedingung erfüllt ist. Diese Abbruchbedingung ist beispielsweise, dass der Roboter sich wieder auf der dem zuvor (bei Erkennung des Hindernisses) verlassenen Bahnsegment befindet, oder dass der Roboter sich auf einem anderen, noch unbearbeiteten Segment der Mäanderbahn befindet.

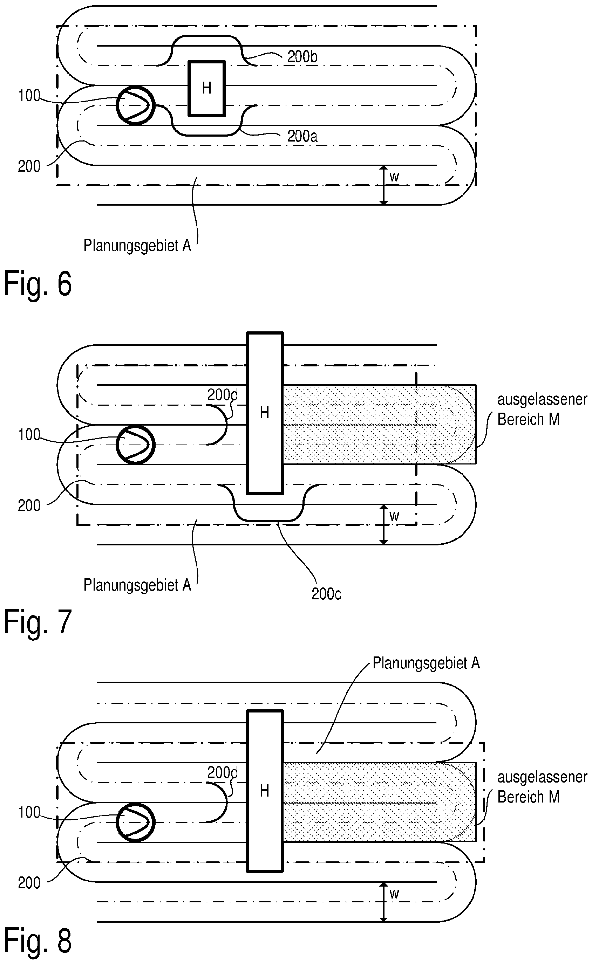

Durch eine Kombination von anfänglicher Planung eines Bahnsegments einer Roboterbahn gemäß einem Bearbeitungsmuster mit reaktiven Algorithmen kann der Roboter "intelligentere" Entscheidungen treffen, um so die Effizienz der Bearbeitung bei möglichst vollständiger Abdeckung des Gebiets G zu erhöhen. Hierbei soll der autonome mobile Roboter 100 auf Basis von Daten über seine Umgebung eine Entscheidung treffen, ob er die Reinigung des aktuell bearbeiteten Bahnsegments fortsetzen soll oder ob es günstiger ist die Reinigung eines neuen Bahnsegments zu starten. Hierfür kann der Bearbeitungsgewinn (*process gain,* d. h. die insgesamt bearbeitete Fläche steigt) gegen die notwendige Kosten in Form von Umwegen und/oder doppelter Reinigung einer Fläche abgewogen werden und die notwendige Planung auf einen Korridor (im Folgenden auch als Planungsgebiet bezeichnet) um das aktuell bearbeitete Bahnsegment eingeschränkt werden, um den Planungsaufwand zu reduzieren. Dies wird im Folgenden beispielhaft anhand der Fig. 6 und 7 erläutert.

*Ausweichmanöver:* Wenn der autonome mobile Roboter in einem Gebiet G beispielsweise mit einem mäanderförmigen Bearbeitungsmuster einen Boden reinigt, auf dem ein oder mehrere Hindernisse H stehen, so muss er entscheiden können, ob es effektiver ist, das Hindernis zu umfahren (siehe Fig. 6, Ausweichbahnsegmente 200a und 200b), um die Bearbeitung hinter dem Hindernis H fortzusetzen, oder ein neues Bahnsegment der Mäanderbahn 200 zu beginnen (vgl. Fig. 7, Umkehrbahnsegment 200d zum nächsten regulären Bahnsegment). Hierbei ergibt sich das Problem, dass der Aufwand und die Anzahl der zu berücksichtigenden Möglichkeiten exponentiell mit der Größe des Gebiets, das bei der Planung berücksichtigt wird, steigt. Deshalb kann das Gebiet, in dem die Planung durchgeführt wird, auf Planungsgebiet A (siehe Fig. 6 und 7) um das aktuell durchfahrene Bahnsegment eingeschränkt werden, um den Planungsaufwand zu reduzieren. Das Planungsgebiet A ist beispielsweise rechteckig und hat eine vordefinierte Ausdehnung rechts und links des aktuellen Bahnsegments (Breite des Planungsgebiets). In Richtung des Bahnsegments (d.h. in oder gegen die Fahrtrichtung des Roboters) ist das Planungsgebiet beispielsweise nur durch das zu bearbeitende Gebiet G begrenzt, wodurch es den Charakter eines Korridors erhält. Alternativ kann es auch an der aktuellen Roboterposition beginnen und sich entlang des Bahnsegments bis zur Grenze des Gebiets G und/oder bis zu einem maximalen Planungshorizont (z.B. 5 m vor dem Roboter, z.B. durch die Reichweite eines Sensors gegeben) erstrecken.

Wenn der Roboter ein oder mehr Hindernisse H entdeckt, welche die Bearbeitung der aktuellen Bahn blockieren, so prüft er, ob ein Ausweichen innerhalb des Korridors (Planungsgebiet A) möglich ist. Wenn - wie in dem Beispiel in Fig. 7 - das Ausweichen innerhalb des Planungsgebiets A nicht möglich ist, so sucht er einen Startpunkt (z.B. am Ende des Umkehrbahnsegments 200d) für eine neue Mäanderbahn. Hierdurch schränkt die Breite des Korridors automatisch die möglichen Ausweichmanöver ein. Der Roboter kann eine Entscheidung über ein Ausweichmanöver treffen, ohne das Ergebnis der Planung bewerten zu müssen. Um unnötige Ausweichmanöver zu vermeiden ist der Korridor (Planungsgebiet A) beispielsweise drei bis vier (oder fünf) mal so breit wie der Roboter oder wie ein Bahnsegment (Breite w, in den dargestellten Abbildungen ist diese gleich groß wie die Breite des Roboters, was aber nicht notwendigerweise so sein muss). Zusätzlich ist die Größe des Korridors so gewählt, dass Hindernisse, welche ausschließlich die aktuelle Bahn blockieren, umgangen werden können. Der Korridor ist also insbesondere mindestens zwei Mal so breit (quer zu den geradlinigen Bahnsegmenten der Mäanderbahn 200) wie der Roboter.

Es sei angemerkt, dass das Planungsgebiet A symmetrisch oder versetzt gegenüber dem aktuell bearbeiteten Bahnsegment sein kann. Beispielsweise kann bei symmetrischen Robotern oder zur Vereinfachung der Berechnungen ein symmetrischer Planungskorridor genutzt werden. Bei einem mäanderförmigen Bearbeitungsmuster kann der Korridor (Planungsgebiet A) so gewählt sein, dass er weiter in den unbearbeiteten Bereich als in den schon bearbeiteten Bereich hineinragt. Diese Situation ist z.B. in Fig. 8 dargestellt, wobei das Planungsgebiet A quer zur Fahrtrichtung des Roboters 100 und relativ zum Roboter 100 sich nur eine Bahnbreite w nach rechts (auf der Karte nach unten), jedoch zwei Bahnbreiten (d.h. 2·w) nach links (auf der Karte nach oben) erstreckt.

Zum Ausweichen oder Umgehen von einem oder mehreren Hindernissen sind verschieden Algorithmen an sich bekannt (siehe z. B. R. Siegwart, I. R. Nourbakhsh, and D. Scaramuzza: "Introduction to Autonomous Mobile Robots", The MIT Press). Beispielsweise kann ein Hindernis mit einem "*Bug*-Algorithmus" (*bug algorithm*) umgangen werden. Insbesondere folgt der Roboter dem Rand des Hindernisses, bis er wieder auf das zu dem ursprünglichen Bearbeitungsmuster gehörende Bahnsegment einschwenken kann. Während der Roboter versucht, das Hindernis zu umgehen, prüft er, ob er sich in dem zur Planung genutzten Planungsgebiet A bewegt. Wenn dieser verlassen wird, unterbricht der Roboter den Ausweichversuch um das Hindernis und sucht einen Startpunkt für eine neue dem Reinigungsmuster entsprechende Bahn. Dieser Fall tritt nur ein, wenn der Roboter das Hindernis falsch eingeschätzt hat, beispielsweise weil es sich entweder bewegt (oder bewegt hat) oder es schlecht von seinen Sensoren erfassen kann, wodurch die zuvor beschriebene Planung ergeben hat, dass das Hindernis innerhalb des Korridors umgangen werden kann, tatsächlich dies aber nicht der Fall ist.

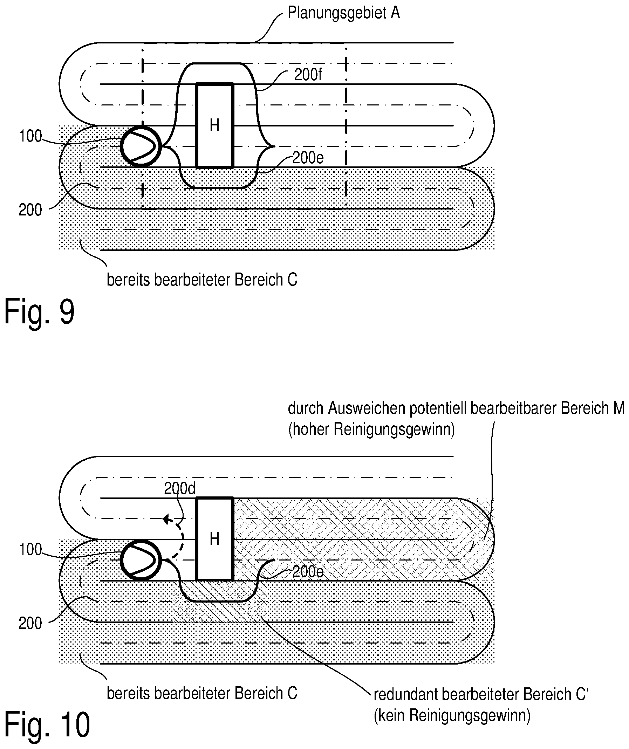

Bei der Prüfung, ob und wie der Roboter ein Hindernis umgehen kann, kann der Roboter zusätzlich prüfen, ob es einen Bearbeitungsgewinn (d. h. es wird eine zuvor unbearbeitet Fläche bearbeitet) während des Ausweichmanövers gibt. Diese Situation ist in Fig. 9 dargestellt. Beispielsweise kann während einer Fahrt entlang einer Mäanderbahn der Bereich rechts neben dem Hindernis frei aber schon vollständig gereinigt worden sein (siehe z.B. Fig. 9, das Ausweichbahnsegment 200e führt im Wesentlichen durch einen bereits bearbeiteten Bereich C, der Bearbeitungsgewinn entlang diesem Ausweichbahnsegment 200e wäre also ziemlich gering). In diesem Fall, kann der Roboter prüfen, ob er das Hindernis links innerhalb des Korridors umgehen kann (siehe z.B. Fig. 9, das alternative Ausweichbahnsegment 200f führt nur durch einen unbearbeiteten Bereich U, der Bearbeitungsgewinn entlang diesem Ausweichbahnsegment 200f wäre also hoch. Wenn dies nicht möglich ist, kann er einen Startpunkt für ein neues Bahnsegment gemäß dem Mäandermuster suchen (siehe Fig. 7, Umkehrbahnsegment 200d). Die Berechnung des Reinigungsgewinns erfolgt beispielsweise durch den Vergleich der durch das geplante Ausweichmanöver gereinigten Fläche mit der in einer Reinigungskarte gespeicherten zuvor gereinigten Fläche (Bereich C).

In einem zweiten Beispiel reinigt der Roboter 100 mit mäanderförmig aneinandergereihten Bahnsegmenten und kann das Hindernis in beide Richtungen mit einem Reinigungsgewinn umgehen. Um in diesem Fall einen isolierten nicht-gereinigten Bereich zu vermeiden, sollte das Hindernis in Richtung der letzten Mäanderbahn umgangen werden. Es gibt also eine am Reinigungsmuster ausgerichtete Vorzugsrichtung zum Ausweichen um ein Hindernis, welche in Richtung des schon gereinigten Bereichs zeigt. Gemäß diesem Aspekt würde in dem Beispiel gemäß Fig. 6 das Ausweichbahnsegment 200a gegenüber dem Ausweichbahnsegment 200b bevorzugt.

In einigen Fällen ist der Roboter 100 nicht symmetrisch gestaltet, sondern besitzt beispielsweise eine Seitenbürste am rechten Rand, die es ihm erlaubt die Fläche bis an die Grenze eines Hindernis zur Rechten des Roboters 100 zu reinigen. Hingegen würde zu einem Hindernis zur Linken des Roboters 100 ein unbehandelter Bereich verbleiben. Dies kann beispielsweise bei der zuvor beschriebenen Methode der Bewertung des Reinigungsgewinns berücksichtigt werden. Alternativ kann der Roboter eine fixe Vorzugsrichtung besitzen, die dafür sorgt, dass der Roboter so einem Hindernis ausweicht, dass es zu seiner Rechten liegt.

Als zusätzliches Entscheidungskriterium zur Umgehung eines Hindernisses kann der Roboter 100 den zu erwartenden Reinigungsgewinn hinter einem Hindernis H berücksichtigen, welcher mit der Reinigungskarte bestimmbar ist. So wird ein Hindernis umgangen, wenn der Aufwand, der durch eine mögliche Doppelreinigung während dem Ausweichmanöver entsteht, deutlich kleiner ist als der zu erwartende Reinigungsgewinn. Diese Situation ist in Fig. 10 dargestellt. Demnach wird bei einer Umfahrung des Hindernisses H gegen den Uhrzeigersinn entlang des Ausweichbahnsegments 200e ein kleiner Bereich C' ein zweites Mal (also redundant) bearbeitet (Reinigungsgewinn null). Durch das Ausweichen wird jedoch die weitere Bearbeitung des viel größeren Bereichs M (hoher Reinigungsgewinn) ermöglicht. So kann der Roboter entscheiden, einen Startpunkt für eine neue Mäanderbahn zu suchen und entlang dem Umkehrbahnsegment 200d umzukehren, wenn der Aufwand in Form der Befahrung einer zuvor bereits gereinigten Bereichs (Aufwand gemessen als Flächeninhalt des Bereichs C') einen vordefinierten Grenzwert überschreitet, oder wenn der Reinigungsgewinn einen vordefinierten Grenzwert unterschreitet. Alternativ kann der Roboter seine Entscheidung basierend auf dem Verhältnis von schon gereinigter zu befahrender Fläche des Bereichs C' und der potentiell zu reinigenden Fläche des Bereichs M fällen. Wenn hierbei ein Flächenstück nicht gereinigt wird (also ein ausgelassener Bereich entsteht), so kann dieser mit dem weiter oben beschriebenen Verfahren (vgl. Fig. 1 bis 5) zur Anpassung eines Reinigungsmusters zur Reinigung eines ausgelassenen Bereichs nachgeholt werden.

Ein analoges Vorgehen ist möglich, wenn das aktuell gereinigte Bahnsegment über einen zuvor gereinigten Bereich führt. Dieser zuvor gereinigte Bereich kann beispielsweise von einer Umgehung eines Hindernisses stammen. Der Roboter entscheidet dann z.B. anhand des zu erwartenden Reinigungsgewinns und/oder anhand der Kosten durch die nochmalige Reinigung eines zuvor gereinigten Bereichs, ob die geplante Bahn durch das zuvor gereinigte Gebiet fortgesetzt wird, oder ob ein Startpunkt für eine neue Mäanderbahn gesucht wird.

Ein mäanderförmiges Bearbeitungsmuster besteht aus annähernd parallelen geradlinigen Bahnsegmenten in einem Abstand, der der Bahnbreite w (Breite des Bearbeitungsmoduls) abzüglich einer gewünschten Überlappung entspricht. Durch eine kleine Überlappung von beispielsweise ein bis zwei Zentimetern kann trotz kleiner Ungenauigkeiten bei der Lokalisierung und/oder Steuerung des Roboters eine vollständige Abdeckung der Fläche garantiert werden. Bei einer Überlappung von mehr als 50% kann die Bodenfläche zumindest zweimal bearbeitet werden. Weitere Bearbeitungsmuster können beispielsweise mit einem beliebigen Startsegment und weiteren Bahnsegmenten mit passend gewählter Überlappung mit (d.h. einem entsprechendem Abstand zu) dem jeweils vorhergehenden Bahnsegment erzeugt werden. In dem folgenden, in Figur 11 gezeigten Beispiel wird die Vorgehensweise des Roboters bei der dynamischen Anpassung eines Bahnsegmentes einer Mäanderbahn sowie bei der dynamischen Suche eines neuen Startpunktes auf dem nächsten Segment dargestellt.

Zunächst werden in dem zu bearbeitende Gebiet G gemäß dem vorgegebenen Bearbeitungsmuster z.B. geradlinige Bahnsegmente festgelegt, welche aneinandergrenzen und sich überlappen können (eine Überlappung ist in Fig. 11 nicht gezeigt). Die Wahl des Startpunktes S1 auf dem ersten Bahnsegment im vorliegenden Beispiel unproblematisch, und der Startpunkt wird auf dem ersten Bahnsegment im Bereich einer Ecke des zu reinigenden Gebiets fest, beispielsweise in jeder Ecke, die der aktuellen Position des Roboters am nächsten ist. Wenn der Roboter am Ende eines Bahnsegmentes (Endpunkte, E1, E2, E3) angelangt ist, wird ein Startpunkt auf dem nachfolgenden Bahnsegment gesucht (Startpunkte S2, S3, S4). Dieser wird in der Regel möglichst nahe der aktuellen Position des Roboters 100 festgelegt (also direkt "über" dem jeweiligen Endpunkt auf dem nächsten Bahnsegment, siehe Fig. 11, Punkte E1 und S2). Wäre dieser Startpunkt nicht erreichbar (z.B. blockiert durch ein Hindernis), könnte der Startpunkt entlang des Bahnsegmentes verschoben werden, bis eine Erreichbarkeit des Startpunktes gewährleistet ist. In Fig. 11 ist z.B. im letzten Bahnsegment ein Hindernis H3, welches eine Verschiebung des Startpunktes S4 nach links verursacht. Am Endpunkt E4 erkennt der Roboter den ausgelassenen Bereich M wie zuvor unter Bezugnahme auf die Fig, 2 bis 5 beschrieben, und er kann diesen Bereich M reinigen. Damit ist die Bearbeitung des Gebiets G abgeschlossen. Wenn in dem gesamten nächsten Bahnsegmente kein erreichbarer Startpunkt mehr gefunden wird, so ist die Reinigung des Gebiets offenbar abgeschlossen. In Fig. 11 gibt es z.B. kein fünftes geradliniges Bahnsegment und daher auch keinen zugehörigen Startpunkt S5.

Ausgehend von einem erreichbaren Startpunkt wird entlang der neuen Bahn in beide Richtungen der mögliche Reinigungsgewinn auf dieser Bahn bestimmt. Hierbei kann die Planung auf den zuvor beschriebenen Korridor beschränkt, und die zuvor beschriebenen Prinzipien zur Planung der Umgehung von Hindernissen und der nochmaligen Reinigung eines zuvor gereinigten Gebiets berücksichtigt werden.

Basierend auf dem so bestimmten möglichen Reinigungsgewinn, kann der Roboter 100 entscheiden, in welche Richtung er eine Reinigung der Bahn startet, oder ob er einen neuen Startpunkt auf der Bahn oder eine neue Bahn ermitteln soll. Hierbei ergeben sich beispielsweise folgende Möglichkeiten: (a) In eine Richtung ist kein Reinigungsgewinn möglich, da hier schon gereinigt wurde, oder ein Hindernis steht. In die zweite Richtung ist ein Reinigungsgewinn möglich. Der Roboter beginnt die Reinigung in diese zweite Richtung. (b) In beide Richtungen ist eine Reinigung möglich. In eine Richtung entspricht sie aber beispielsweise nur der Grundfläche des Roboters (Ist also kleiner als ein vorgegebener Grenzwert). Der Roboter verschiebt den Startpunkt in diese Richtung, um so die gesamte mögliche Bahnlänge auf einmal reinigen zu können. (c) In beide Richtungen ist der Reinigungsgewinn kleiner als ein Mindestwert oder gleich Null, da beispielsweise je rechts und links ein größeres Hindernis steht. Der Roboter versucht ein neues Bahnsegment zu ermitteln. (d) In beide Richtungen ist der Reinigungsgewinn größer als ein Grenzwert; in diesem (in der Praxis eher selten auftretenden) Fall wird in Richtung des größeren Reinigungsgewinns gereinigt.

In dem Beispiel (siehe Fig. 11) wird der Roboter das zweite Bahnsegment vom Startpunkt S2 aus nach links bearbeiten bis er zu dem Hindernis H1 gelangt. Da hinter dem Hindernis H1 keine weitere Reinigung möglich ist, wird nicht versucht, das Hindernis H1 zu umfahren und die Bearbeitung des zweiten Bahnsegments ist abgeschlossen (Endpunkt E2). Der nächste Startpunkt S3 in dem dritten Bahnsegment wird direkt über dem Endpunkt E2 gewählt, wodurch in dem dritten Segment oberhalb des Hindernisses H1 die Bearbeitung eines Bereichs M ausgelassen wird. Da ein nennenswerter Reinigungsgewinn in dem dritten Bahnsegment nur nach rechts möglich ist, setzt der Roboter 100 die Bearbeitung nach rechts fort bis er im Punkt X zu dem Hindernis H2 gelangt. Diese kann leicht umfahren werden und der Roboter adaptiert das Bahnsegment mittels dem Ausweichbahnsegment 200b (siehe auch Fig. 9). Am Endpunkt E3 des dritten Segments angelangt wird der Startpunkt S4 auf dem vierten Bahnsegment gesucht. Wie oben erwähnt, wird dieser wegen des Hindernisses H3 nach links verschoben. Ausgehend vom Startpunkt S4 ist ein Reinigungsgewinn nur nach links möglich und die Reinigung wird bis zum Endpunkt E4 fortgesetzt. Das nächste, fünfte Segment (nicht dargestellt) ist wegen der Grenze (z.B. eine Wand) des Gebiets G nicht erreichbar und daher kann auch kein Startpunkt S5 gefunden werden. Die Reinigung ist damit abgeschlossen.

Damit der Roboter 100 eine Fläche beispielsweise mittels einer mäanderförmigen Bahn 200 reinigen kann, muss er seine Position bestimmen und korrigieren können (beispielsweise mittels SLAM-Verfahren). Allerdings gibt es hierbei beispielsweise durch Mess- oder Fahrfehler immer Ungenauigkeiten in der Positionierung und/oder Lokalisierung, die zu nicht-gereinigten Streifen zwischen zwei gereinigten Mäanderbahnen führen können. Um diese zu vermeiden, wird die Bearbeitung mit einer Überlappung zwischen dem aktuellen Bahnsegment (siehe Fig. 3A, Fläche T) und dem zuvor gereinigten Bahnsegment siehe Fig. 3A, Fläche C) durchgeführt. Diese Überlappung ist z.B. in Fig. 12 beispielhaft dargestellt, wobei die Breite eines Bahnsegmentes mit w bezeichnet ist und die Überlappung zweier Benachbarter Bahnsegmente mit o₁, o₂, o₃, o₄, etc. Der Abstand zweier benachbarter, im Wesentlichen parallel verlaufender Bahnsegmente ist also kleiner als die Breite w eines Bahnsegments (nämlich w-o₁, w-o₂, etc.). Die auftretenden Ungenauigkeiten hängen in der Regel vom Material einer befahrenen Fläche und der mit den Sensoren des Roboters erfassbaren Umgebung ab und können innerhalb des Robotereinsatzgebietes stark schwanken. Es ist deshalb vorteilhaft ein Maß für die Ungenauigkeit der Positionierung und/oder der Lokalisierung zu bestimmen und entsprechend das Reinigungsmuster anzupassen.

So können beispielsweise statistische SLAM-Verfahren zusätzlich zur Position des Roboters 100 die Unsicherheit der Lokalisierung schätzen. Basierend auf dieser Schätzung kann somit beispielsweise die Überlappung o₁, o₂, o₃, etc. zwischen dem aktuell bearbeiteten Bahnsegment (Fläche T) und der zuvor gereinigten Fläche (Bereich C) bestimmt und angepasst werden, so dass eine vollständige Reinigung der Fläche trotz ungenauer Lokalisierung sichergestellt ist. Gleichzeitig kann in Gebieten mit hoher Zuverlässigkeit der Lokalisierung die Überlappung auf ein Minimum reduziert werden, wodurch die Reinigung der Fläche beschleunigt wird.

Beispielsweise basiert das verwendete SLAM-Verfahren auf einem Extended-Kalman-Filter oder einem sogenannten Partikelfilter wodurch die Wahrscheinlichkeitsverteilung der zu erwartenden Roboterposition und umgebender Hindernisse (z.B. Wand) bestimmt wird. Auf Basis dieser Wahrscheinlichkeitsverteilung kann nun als Maß für die Ungenauigkeit der Lokalisierung beispielsweise die Standardabweichung der Position des Roboters relativ zu den umgebenden Hindernissen bestimmt werden. Wenn nun die geplante Überlappung bei beispielsweise der zweifachen Standardabweichung liegt, so ist die theoretische Wahrscheinlichkeit zirka 2%, dass zwischen dem aktuell bearbeiteten Bahnsegment (Fläche T) und der zuvor gereinigten Fläche (C) ein nicht-gereinigter Bereich verbleibt (negative Überlappung). Durch wiederholte Lokalisierung wird die Wahrscheinlichkeit weiter reduziert, so dass sie in der Praxis keine Rolle mehr spielt. Eine Ungenauigkeit der Positionierung kann ebenfalls in einem SLAM-Verfahren abgeschätzt werden. So wird beispielsweise in einem ersten Schritt geschätzt, wo sich der Roboter aufgrund der Bewegungskommandos der Robotersteuerung befindet (Positionierung). In einem zweiten Schritt wird beispielsweise mit Hilfe von Messungen des Abstands zu Hindernissen der Umgebung (z.B. Wand) diese erste Schätzung korrigiert (Lokalisierung). Das heißt also, die Position des Roboters ist bekannt, jedoch befindet er sich aufgrund von Odometriefehlern (z.B. bodenbelagsabhängig) nicht an der ursprünglich geplanten Stelle. Die hierbei notwendige Korrektur ist ebenfalls ein geeignetes Maß zur Bestimmung einer notwendigen Überlappung o₁, o₂, o₃, etc.

Die Überlappung kann beispielsweise bei der Wahl eines Startpunktes für ein Bahnsegment der Mäanderbahn gewählt werden. Zusätzlich kann auch während der Reinigung einer Bahn festgestellt werden, dass die Ungenauigkeit der Lokalisierung sich plötzlich verschlechtert oder verbessert hat (oder die Genauigkeit der Lokalisierung, was praktisch dasselbe ist). In diesem Fall kann beispielsweise die Bearbeitung der aktuellen Bahn unterbrochen werden um eine Bahn mit an die neue Ungenauigkeit angepasster Überlappung zu wählen, oder der geplante Bahnverlauf der aktuellen Bahn dynamisch angepasst werden. Eine Überlappung (z.B. o₁ zwischen dem ersten und dem zweiten Bahnsegment in Fig. 12) kann also auch während des Durchfahrens eines Segments angepasst werden.

In einigen Fällen kann die bestimmte Überlappung zwischen dem aktuell bearbeiteten Bahnsegment (Fläche T) und der zuvor gereinigten Fläche C so groß werden, dass eine systematische Reinigung mit dem gewählten Reinigungsmuster nicht mehr effizient durchgeführt werden kann. In solch einem Fall kann die Reinigungsstrategie angepasst werden. Beispielsweise kann das Bearbeitungsmuster zweimal angewendet werden, wobei es bei der zweiten Anwendung relativ zur ersten Anwendung verdreht (z. B. um ca. 90°) und/oder verschoben (z. B. um ca. die halbe Bahnbreite) ist. Wenn die Ungenauigkeit so groß wird, dass eine gezielte Navigation nicht oder nur schwer möglich ist, kann beispielsweise ein einfaches zufallsgesteuertes und/oder chaotisches Bearbeitungsmuster angewendet werden. In einigen Fällen ist die Ungenauigkeit in der Positionierung und Lokalisierung des Roboters nicht isotrop. Beispielsweise kann der Roboter in einem langen Flur sehr gut seinen Abstand zu den beiden Wänden des Flurs messen, hat aber keine Orientierungspunkte um seine Position entlang der Wände (d.h. in einer Richtung parallel zu den Wänden) zu bestimmen. In diesem Fall einer richtungsabhängigen Unsicherheit ist es vorteilhaft, das Bearbeitungsmuster so auszurichten, dass die Richtung, in der die Überlappung stattfindet, die Richtung hoher Genauigkeit ist. In einem Flur sollte der Roboter deshalb Bahnsegmente parallel zu den Wänden planen.

Der Roboter kann das Maß der Ungenauigkeit der Positionsbestimmung bzw. Lokalisierung in dem gesamten zu reinigendem Gebiet G erfassen. Die Maßzahlen für die Ungenauigkeit können auch in einer Karte des Roboters gespeichert und bei einem künftigen Arbeitseinsatz von vornherein berücksichtigt werden. Auf dieser Basis kann der Roboter in dem zu reinigende Gebiet zumindest einen Teilbereich identifizieren, in dem das Maß der Ungenauigkeit vorwiegend über einem Grenzwert liegt. Dann kann der Roboter nur für diesen Teilbereich das Bearbeitungsmuster anpassen. Beispielsweise kann der Roboter 100 so in einem sehr großen Raum in der Nähe von Hindernissen, die er zu seiner Lokalisierung nutzen kann, systematisch, und in der Mitte des Raumes ohne erkennbare Hindernisse chaotisch reinigen. Die auf der Ungenauigkeit basierende Aufteilung des Gebietes G kann der Roboter beispielsweise dauerhaft abspeichern (z. B. mit einer Karte).

## Patentansprüche

1. Verfahren zum Bearbeiten einer Oberfläche eines zu bearbeitenden Gebiets (G) mittels eines autonomen, mobilen Roboters (100); das Verfahren weist auf:
Bearbeiten der Oberfläche entlang von Bahnsegmenten einer Roboterbahn (200) gemäß einem ersten Bearbeitungsmuster;
Zerlegen des zu bearbeitenden Gebiets (G) abhängig von einer aktuellen Position des Roboters (100) in einen ersten Bereich (C), der gemäß dem Bearbeitungsmuster schon bearbeitet sein sollte, einen zweiten Bereich (U), der noch bearbeitet werden soll, und in einen dritten Bereich (T), der aktuell bearbeitet wird;
Laufendes Prüfen, ob der erste Bereich (C) tatsächlich vollständig bearbeitet wurde; und
sobald ein ausgelassener Bereich detektiert wurde, Entscheiden, ob der ausgelassene Bereich bearbeitet werden sollte.

2. Verfahren gemäß Anspruch 1, das weiter aufweist,
Prüfen, ob der erste Bereich vollständig erreichbar und für den Roboter befahrbar ist.

3. Verfahren gemäß der Anspruch 1 oder 2, wobei der Roboter (100) dazu ausgebildet ist, tatsächlich bereits bearbeitete Bereiche des Gebiets (G) in einer Karte abzuspeichern, wobei das Prüfen, ob der erste Bereich (C) tatsächlich vollständig gereinigt wurde, anhand der Karte erfolgt.

4. Verfahren gemäß einem der Ansprüche 1 bis 3, das weiter aufweist,
Ermitteln eines ausgelassenen Bereichs (M) im ersten Bereich (C), wenn die Prüfung ergibt, dass der erste Bereich nicht vollständig bearbeitet wurde;
Unterbrechen der Bearbeitung des Gebiets (G) gemäß dem ersten Bearbeitungsmuster und bearbeiten des ausgelassenen Bereichs (M) gemäß einem zweiten Bearbeitungsmuster.

5. Verfahren gemäß Anspruch 4, bei dem das Bearbeiten des ausgelassenen Bereichs aufweist:
Fahren des Roboters (100) entlang einer Grenze des ausgelassenen Bereichs (M) bis zu einem ersten Punkt (R) in dem ausgelassenen Bereich (M), der einen möglichst großen Abstand zu dem dritten Bereich (T) hat, der vor der Unterbrechung bearbeitet wurde.

6. Verfahren gemäß Anspruch 5, wobei der Roboter das Erreichen des ersten Punktes (R) dadurch erkennt, dass er, während der Fahrt entlang der Grenze des ausgelassenen Bereichs (M), sich nicht mehr weiter von dem dritten Bereich (T) entfernt oder sich diesem wieder nähert oder dass sich die Fahrtrichtung des Roboters (100) wieder einer Richtung entspricht, die im Wesentlichen gleich der Fahrrichtung Roboters (100) vor der Unterbrechung ist.

7. Verfahren gemäß einem der Ansprüche 4 bis 6, wobei der Roboter die Bearbeitung des ausgelassenen Bereichs (M) gemäß dem zweiten Bearbeitungsmuster so plant, dass die Bearbeitung des ausgelassenen Bereichs (M) in dem dritten Bereich (T) beendet wird, der vor der Unterbrechung bearbeitet wurde.

8. Verfahren gemäß Anspruch 7, wobei das zweite Bearbeitungsmuster ein Mäandermuster ist und der Abstand zweier benachbarter, im Wesentlichen parallel verlaufender Bahnsegmente des Mäandermusters so angepasst wird, dass der Roboter (100) die Bearbeitung des ausgelassenen Bereichs (M) in dem dritten Bereich (T) beendet und den zuvor unterbrochenen Bearbeitungsvorgang fortsetzen kann.

9. Verfahren gemäß einem der Ansprüche 1 bis 8, wobei die Prüfung, ob der erste Bereich (C) tatsächlich vollständig gereinigt wurde, dann positiv ist, wenn kein zusammenhängender nicht gereinigter Anteil des ersten Bereichs (C) größer als eine Mindestfläche ist.

10. Verfahren gemäß einem der Ansprüche 1 bis 9, wobei beim Zerlegen des zu bearbeitenden Gebiets (G) nur ein Teilbereich (S) des Gebiets berücksichtigt wird, wobei der Teilbereich (S) sich mit dem Roboter (100) mitbewegt.

11. Verfahren zum Bearbeiten einer Oberfläche eines zu bearbeitenden Gebiets (G) mittels eines autonomen, mobilen Roboters (100); das Verfahren weist auf:
Bearbeiten der Oberfläche entlang von Bahnsegmenten einer Roboterbahn (200) gemäß einem ersten Bearbeitungsmuster, wobei die Bahnsegmente eine Reihenfolge aufweisen;
Detektieren, während des Bearbeitens eines bestimmten Bahnsegments der Bahnsegmente, ob in mindestens einem Bahnsegment, welches in der Reihenfolge vor dem bestimmten Bahnsegment liegt, ein noch nicht bearbeiteter Bereich (M) existiert, der bei ungehinderter Durchführung der Bearbeitung gemäß der Reihenfolge bereits hätte gereinigt werden müssen; und
sobald ein ausgelassener Bereich detektiert wurde, Entscheiden, ob der ausgelassene Bereich bearbeitet werden sollte.

12. Verfahren gemäß Anspruch 11,
wobei die Bearbeitung der Bahnsegmente von einem Startpunkt (S1, S2, S3, S4) des jeweiligen Bahnsegments bis zu einem Endpunkt (E1, E2, E3, E4) des jeweiligen Bahnsegments erfolgt, wobei der Endpunkt festgelegt wird, wenn zumindest eines der folgenden Ereignisse vom Roboter (100) detektiert wird: eine Grenze des zu bearbeitenden Gebiets (G) wird erreicht, ein Hindernis wird detektiert

13. Verfahren gemäß Anspruch 12,
wobei, wenn der Roboter den Endpunkt des jeweiligen Bahnsegments erreicht, ein Startpunkt auf dem gemäß der Reihenfolge nächsten Bahnsegment gesucht wird.

14. Verfahren gemäß einem der Ansprüche 11 bis 14, das weiter aufweist:
Speichern, welche Bereiche (C) der Oberfläche des Gebiets (G) bereits bearbeiten wurden, in einer Karte des Gebiets (G) und während der Bearbeitung,
wobei das Detektieren des noch nicht bearbeiteten Bereichs basierend auf den in der Karte gespeicherten Daten erfolgt.

15. Autonomer Roboter, der mit einer internen und/oder externen Datenverarbeitungsanlage verbunden ist, welche dazu ausgebildet ist, ein Softwareprogramm auszuführen, das, wenn es von der Datenverarbeitungsanlage ausgeführt wird, den Roboter dazu veranlasst, ein Verfahren gemäß einem der Ansprüche 1 bis 14 auszuführen.

## Claims

1. A method for machining a surface of a region (G) to be machined using an autonomous mobile robot (100); the method comprises:
machining the surface along track segments of a robot track (200) according to a first machining pattern;
dividing the region (G) to be machined depending on a current position of the robot (100) into a first area (C) which should already be machined according to the machining pattern, a second area (U) which is yet to be machined, and a third area (T) which is currently being machined;
continuously checking whether the first area (C) has in fact been completely machined; and,
as soon as an omitted area has been detected, deciding whether the omitted area should be machined.

2. The method according to claim 1, which further comprises:
checking whether the first area is entirely reachable and can be travelled by the robot.

3. The method according to claim 1 or 2, wherein the robot (100) is designed to store already in fact machined areas of the region (G) in a map, wherein the check as to whether the first area (C) has in fact been completely cleaned occurs based on the map.

4. The method according to any one of claims 1 to 3, which moreover comprises:
determining an omitted area (M) in a first area (C) when the check indicates that the first area has not been completely machined;
interrupting the machining of the region (G) according to the first machining pattern, and machining the omitted area (M) according to a second machining pattern.

5. The method according to claim 4, wherein the machining of the omitted area comprises:
moving the robot (100) along a boundary of the omitted area (M) up to a first point (R) in the omitted area (M), which is as far as possible from the third area (T) which was being machined before the interruption.

6. The method according to claim 5, wherein the robot detects the reaching of the first point (R) in that, during the movement along the boundary of the omitted area (M), it no longer moves farther away from or closer again to the third region (T), or in that the movement direction of the robot (100) again corresponds to a direction which is substantially the same as the movement direction of the robot (100) before the interruption.

7. The method according to any one of claims 4 to 6, wherein the robot plans the machining of the omitted area (M) according to the second machining pattern so that the machining of the omitted area (M) finishes at the third area (T) which was being machined before the interruption.

8. The method according to claim 7, wherein the second machining pattern is a meandering pattern and the distance between two adjacent track segments of the meandering pattern, which extend substantially parallel, is adjusted so that the robot (100) finishes the machining of the omitted area (M) at the third area (T) and can continue the previously interrupted machining process.

9. The method according to any one of claims 1 to 8, wherein the check as to whether the first area (C) has in fact been completely cleaned is positive when no continuous uncleaned portion of the first area (C) is larger than a minimum surface area.

10. The method according to any one of claims 1 to 9, wherein, in the division of the region (G) to be machined, only a sub-area (S) of the region is considered, wherein the sub-area (S) is moved along with the robot (100).

11. A method for machining a surface of a region (G) to be machined using an autonomous mobile robot (100); the method comprises:
machining the surface along track segments of a robot track (200) according to a first machining pattern, wherein the track segments have a sequence;
detecting, during the machining of a particular track segment of the track segments, whether, in at least one track segment which is before the particular track segment in the sequence, there is a not yet machined area (M) that should already have been cleaned, which, in case of unimpeded performance of the machining according to the sequence, would already have had to be cleaned; and,
as soon as an omitted area has been detected, deciding whether the omitted area should be machined.

12. The method according to claim 11,
wherein the machining of the track segments occurs from a starting point (S1, S2, S3, S4) of the respective track segment to an end point (E1, E2, E3, E4) of the respective track segment, wherein the end point is established when at least one of the following events is detected by the robot (100): a boundary of the region (G) to be machined is reached, an obstacle is detected.

13. The method according to claim 12,
wherein, when the robot reaches the end point of the respective track segment, a starting point on the next track segment in the sequence is searched for.

14. The method according to any one of claims 11 to 14, which moreover comprises:
storing which areas (C) of the surface of the region (G) have already been machined in a map of the region (G) and during the processing,
wherein detecting the area which has not yet been machined occurs based on the data stored in the map.

15. An autonomous robot which is connected to an internal and/or external data processing system which is designed to execute a software program which, when it is executed by the data processing system, causes the robot to carry out a method according to any one of claims 1 to 14.

## Revendications

1. Procédé d'usinage d'une surface d'une zone (G) à usiner au moyen d'un robot (100) autonome, mobile ; le procédé présente :
l'usinage de la surface le long de segments de trajectoire d'une trajectoire de robot (200) selon un premier motif d'usinage ;
la décomposition de la zone (G) à usiner en fonction d'une position actuelle du robot (100) en une première région (C), qui devrait déjà être usinée selon le motif d'usinage, une deuxième région (U), qui doit encore être usinée et en une troisième région (T), qui est actuellement usinée ;
le contrôle continu du fait si la première région (C) a été effectivement entièrement usinée ; et
dès qu'une région omise a été détectée, la décision si la région omise devrait être usinée.

2. Procédé selon la revendication 1, qui présente en outre,
le contrôle du fait si la première région est entièrement accessible et praticable pour le robot.

3. Procédé selon la revendication 1 ou 2, dans lequel le robot (100) est réalisé pour enregistrer des régions effectivement déjà usinées de la zone (G) dans une carte, dans lequel le contrôle du fait si la première région (C) a été effectivement entièrement nettoyée, se fait à l'aide de la carte.

4. Procédé selon l'une quelconque des revendications 1 à 3, qui présente en outre,
la détermination d'une région omise (M) dans la première région (C), lorsqu'il ressort du contrôle que la première région n'a pas été entièrement usinée ;
l'interruption de l'usinage de la zone (G) selon le premier motif d'usinage et l'usinage de la région omise (M) selon un deuxième motif d'usinage.

5. Procédé selon la revendication 4, dans lequel l'usinage de la région omise présente :
le déplacement du robot (100) le long d'une limite de la région omise (M) jusqu'à un premier point (R) dans la région omise (M), qui a une distance aussi grande que possible par rapport à la troisième région (T), qui a été usinée avant l'interruption.

6. Procédé selon la revendication 5, dans lequel le robot reconnaît que le premier point (R) est atteint par le fait que, pendant le déplacement le long de la limite de la région omise (M), il ne s'éloigne plus davantage de la troisième région (T) ou se rapproche de celle-ci ou que le sens de circulation du robot (100) correspond à nouveau à un sens qui est sensiblement identique au sens de déplacement du robot (100) avant l'interruption.

7. Procédé selon l'une quelconque des revendications 4 à 6, dans lequel le robot planifie l'usinage de la région omise (M) selon le deuxième motif d'usinage de sorte que l'usinage de la région omise (M) est terminé dans la troisième région (T), qui a été usinée avant l'interruption.

8. Procédé selon la revendication 7, dans lequel le deuxième motif d'usinage est un motif à méandres et la distance de deux segments de trajectoire adjacents, s'étendant sensiblement parallèlement du motif à méandres est adapté de sorte que le robot (100) termine l'usinage de la région omise (M) dans la troisième région (T) et peut poursuivre l'opération d'usinage interrompue auparavant.

9. Procédé selon l'une quelconque des revendications 1 à 8, dans lequel le contrôle du fait si la première région (C) a été effectivement entièrement nettoyée, est positif lorsqu'aucune part non nettoyée contiguë de la première région (C) n'est supérieure à une surface minimum.

10. Procédé selon l'une quelconque des revendications 1 à 9, dans lequel lors de la décomposition de la zone (G) à usiner seule une région partielle (S) de la zone est prise en compte, dans lequel la région partielle (S) se déplace conjointement avec le robot (100).

11. Procédé d'usinage d'une surface d'une zone (G) à usiner au moyen d'un robot (100) autonome, mobile ; le procédé présente :
l'usinage de la surface le long de segments de trajectoire d'une trajectoire de robot (200) selon un premier motif d'usinage, dans lequel les segments de trajectoire présentent un ordre ;
la détection, pendant l'usinage d'un segment de trajectoire déterminé des segments de trajectoire, du fait s'il existe dans au moins un segment de trajectoire, lequel se situe dans l'ordre avant le segment de trajectoire déterminé, une région non encore usinée (M), qui aurait déjà dû être nettoyée lors de la réalisation sans entrave de l'usinage selon l'ordre ; et dès qu'une région omise a été détectée, la décision si la région omise devrait être usinée.

12. Procédé selon la revendication 11,
dans lequel l'usinage des segments de trajectoire se fait d'un point de départ (S1, S2, S3, S4) du segment de trajectoire concerné jusqu'à un point final (E1, E2, E3, E4) du segment de trajectoire concerné, dans lequel le point final est défini lorsqu'au moins un des événements suivants est détecté par le robot (100) : une limite de la zone (G) à usiner est atteinte, un obstacle est détecté.

13. Procédé selon la revendication 12,
dans lequel, lorsque le robot atteint le point final du segment de trajectoire concerné, un point de départ est cherché sur le prochain segment de trajectoire selon l'ordre.

14. Procédé selon l'une quelconque des revendications 11 à 14, qui présente en outre :
l'enregistrement, des régions (C) de la surface de la zone (G) qui ont déjà été usinées, dans une carte de la zone (G) et pendant l'usinage,
dans lequel la détection de la région non encore usinée se fait sur la base des données enregistrées dans la carte.

15. Robot autonome, qui est relié à une installation de traitement de données interne et/ou externe, laquelle est réalisée pour exécuter un programme logiciel, qui, lorsqu'il est exécuté par l'installation de traitement de données, amène le robot à exécuter un procédé selon l'une quelconque des revendications 1 à 14.
